# EUROPÄISCHE PATENTSCHRIFT

(11) **EP 2 037 295 B1**
(45) Veröffentlichungstag und Bekanntmachung des Hinweises auf die Patenterteilung: **03.05.2017**
(21) Anmeldenummer: 08012881.2
(22) Anmeldetag: 17.07.2008
(51) Int. Cl.: G01V 8/12

(54) **Verfahren zur Ausrichtung eines optischen Sensors sowie Ausrichthilfe zur Durchführung des Verfahrens**
Method for aligning an optical sensor and alignment aid for implementing the method
Procédé d'alignement d'un capteur optique et aide à l'alignement destinée à la réalisation du procédé

(30) Priorität: 11.09.2007 DE 102007043284; 18.06.2008 DE 102008028970
(43) Veröffentlichungstag der Anmeldung: 18.03.2009
(73) Patentinhaber: Leuze electronic GmbH + Co. KG, 73277 Owen/Teck (DE)
(72) Erfinder: Argast, Martin, 72584 Hülben (DE); Mast, Gernot, 73235 Weilheim / teck (DE); Teumer, Wolfgang, 72525 Münsingen (DE)
(74) Vertreter: Ruckh, Rainer Gerhard

(56) Entgegenhaltungen:
- EP-A2- 1 717 605
- DE-A1- 19 506 312
- DE-A1- 19 609 238
- DE-U1- 20 215 895
- US-A1- 2004 042 010

## Beschreibung

Die Erfindung betrifft ein Verfahren zur Ausrichtung eines optischen Sensors sowie eine Ausrichthilfe zur Durchführung des Verfahrens.

Optische Sensoren der in Rede stehenden Art können insbesondere von Lichtschranken gebildet sein. Diese weisen einen Sendelichtstrahlen emittierenden Sender sowie einen Empfänger auf, welche an gegenüberliegenden Seiten eines Überwachungsbereichs angeordnet sind. Damit bei freiem Überwachungsbereich die Sendelichtstrahlen des optischen Sensors vom Sender auf den Empfänger treffen, müssen der Sender und der Empfänger der Lichtschranke relativ zueinander ausgerichtet werden.

Da Lichtschranken typischerweise Sendelichtstrahlen im Infrarotbereich, das heißt im nichtsichtbaren Bereich emittieren, können diese zur Ausrichtung der Lichtschranke nicht verwendet werden.

Aus dem Stand der Technik ist es daher bekannt, zur Ausrichtung einer solchen Lichtschranke oder allgemein eines optischen Sensors einen Ausrichtlaser einzusetzen, der einen sichtbaren Laserstrahl emittiert.

Der Ausrichtlaser wird an einer Gehäusefläche eines optischen Sensors so befestigt, dass der Laserstrahl parallel zu den Sendelichtstrahlen auf den gegenüberliegenden Empfänger gerichtet wird. Der optische Sensor wird dann so ausgerichtet, dass der sichtbare Ausrichtlaserfleck den gegenüberliegenden Empfänger trifft.

Eine solche Ausrichtung mit einem Ausrichtlaser ist mit den folgenden Nachteilen behaftet. An dem auszurichtenden Optosensor muss eine Fläche vorgesehen werden, an der ein Ausrichtlaser befestigt werden kann. Zudem muss bei montiertem Optosensor über der Befestigungsfläche Platz für das Anbringen und Befestigen eines Ausrichtlasers vorgesehen werden. Weiterhin ist nachteilig, dass der Ausrichtlaserfleck bei fehlendem oder unterbrochenem Hintergrund nur bedingt sichtbar ist. Zudem weist der Sendelichtstrahl zum Ausrichtlaserstrahl eine Winkelabweichung aufweist, wodurch eine genaue Ausrichtung erschwert wird. Schließlich die Ausrichtgüte (Funktionsreserve) nur mit sehr hohem Aufwand kontrolliert werden kann.

Die DE 195 06 312 A1 betrifft eine Vorrichtung zum Ausrichten zweier über eine Distanz Lichtsignale austauschender optoelektronischer Sensoren, wobei der erste Sensor ein die Lichtsignale aussendendes Sendeelement und ein Empfangselement aufweist und der zweite Sensor wenigstens ein Empfangselement aufweist. Am zweiten Sensor ist wenigstens ein Retroreflektor beweglich angebracht und vor oder neben das Empfangselement positionierbar. Beim Ausrichten der Sensoren wird die vom ersten Sensor emittierte und über den Retroreflektor auf das Empfangselement des ersten Sensors gelangende Lichtmenge als Maß für die Güte der Ausrichtung in einer Auswerteeinheit ausgewertet.

Die DE 202 15 895 U1 betrifft eine Anordnung zur Detektion von Bewegung und/oder Strahlungsintensität, mit einem Gehäuse und einer Sensoreinheit für Bewegungserfassung und/oder einer Sensoreinheit für Strahlungsintensitätserfassung. Die Sensoreinheit ist derart angeordnet, dass sie einerseits direkt auf sie einfallende Strahlung erfasst und darüber hinaus Strahlung erfasst, die mittels einer Spiegeleinheit auf sie reflektiert ist. Die Spiegeleinheit ist mit dem Gehäuse verbunden. Dabei ist die Orientierung der Spiegeleinheit bezüglich der wenigstens einen Sensoreinheit und/oder bezüglich des Gehäuses einstellbar.

Der Erfindung liegt die Aufgabe zugrunde, mit möglichst geringem konstruktivem Aufwand eine exakte Ausrichtung eines optischen Sensors zu ermöglichen.

Zur Lösung dieser Aufgabe sind die Merkmale der Ansprüche 1 und 9 vorgesehen. Vorteilhafte Ausführungsformen und zweckmäßige Weiterbildungen der Erfindung sind in den Unteransprüchen beschrieben.

Das erfindungsgemäße Verfahren dient zur Ausrichtung eines optischen Sensors und umfasst einen Sendelichtstrahlen emittierenden Sender, einen Empfänger zum Empfang der Sendelichtstrahlen sowie eine Auswerteeinheit zur Generierung eines binären Objektfeststellungssignals in Abhängigkeit der Empfangssignale. Die Sendelichtstrahlen sind zur Detektion von Objekten in einem Überwachungsbereich geführt und die Schaltzustände des Objektfeststellungssignals werden als Statusmeldung ausgegeben. Durch Einbringen einer Lichtstrahlablenkeinheit wird der Strahlengang der Sendelichtstrahlen im Überwachungsbereich verändert und die dadurch bedingten Änderungen der Statusmeldung zur Kontrolle der Ausrichtung der Sendelichtstrahlen herangezogen. Die Lichtstrahlablenkeinheit weist wenigstens ein rotierendes Prisma auf.

Ein wesentlicher Vorteil der Erfindung besteht darin, dass zur Ausrichtung der optischen Sensoren der Strahlengang der Sendelichtstrahlen des optischen Sensors verändert wird und damit die Sendelichtstrahlen des optischen Sensors selbst als Kriterium für die Güte der Ausrichtung herangezogen werden. Im Gegensatz zu Ausrichtungen, die mit externen Einheiten wie Ausrichtlasern arbeiten, entfällt somit eine systematische Fehlerquelle, die durch den Versatz der Strahlführung des externen Systems zum Strahlengang der Sendelichtstrahlen, welche auszurichten sind, bedingt ist. Mit dem erfindungsgemäßen Verfahren ist somit eine exakte Ausrichtung des optischen Sensors möglich.

Weiterhin ist vorteilhaft, dass die zur Ausrichtung des optischen Sensors erforderliche Strahlablenkung der Sendelichtstrahlen durch eine Lichtstrahlablenkeinheit bewerkstelligt werden kann, die ohne konstruktive Veränderungen am optischen Sensor anzubringen ist und lediglich in den Strahlengang der Sendelichtstrahlen eingebracht werden muss.

Das Auswerteprinzip bei der Durchführung der Ausrichtung beruht darauf, dass abhängig von der aktuellen Ablenkung der Sendelichtstrahlen das Objektfeststellungssignal des optischen Sensors registriert wird. Hierzu wird die im optischen Sensor generierte Statusmeldung in Abhängigkeit der aktuellen Ablenkung der Sendelichtstrahlen registriert beziehungsweise ausgewertet.

Dabei gibt der aktuelle Zustand des Objektfeststellungssignals an, ob die Sendelichtstrahlen am Sender auf den Empfänger treffen. Wird somit der Status des Objektfeststellungssignals in Abhängigkeit der Ablenkung der Sendelichtstrahlen registriert, liefert dies unmittelbar eine quantitative Information darüber, wie gut der optische Sensor aktuell ausgerichtet ist.

Insbesondere wenn die auszurichtenden Komponenten des optischen Sensors über große Distanzen entfernt sind, ist es vorteilhaft, wenn mit einer Rückmeldeeinheit der aktuelle Status des Objektfeststellungssignals an die Lichtstrahlablenkeinheit gemeldet wird.

Der optische Sensor, der mit dem erfindungsgemäßen Verfahren ausgerichtet wird, arbeitet vorteilhaft nach dem Lichtschrankenprinzip. Insbesondere ist der optische Sensor von einer Lichtschranke, einem Lichtgitter oder einer Reflexionslichtschranke gebildet.

Die Erfindung wird im Nachstehenden anhand der Zeichnungen erläutert. Es zeigen:
- Figur 1:: Schematische Darstellung einer Lichtschranke mit zugeordneter Ausrichthilfe.
- Figur 2:: Ausführung der Ausrichthilfe der Anordnung gemäß Figur 1 als Prisma.
- Figur 3:: Verschiebung des Sendelichtflecks der Lichtschranke mit der Ausrichthilfe für die Anordnung gemäß Figur 2.
- Figur 4:: Strahlverlauf der Sendelichtstrahlen der Lichtschranke gemäß den Figuren 1 und 2 bei ausgerichteter Lichtschranke.
- Figur 5a, b:: Unterschiedliche Ablenkungen der Sendelichtstrahlen der Lichtschranke mittels der Ausrichthilfe gemäß Figur 2.
- Figur 6:: Unterschiedliche Sendelichtfleckpositionen bei Ablenkung der Sendelichtstrahlen gemäß den Anordnungen gemäß Figuren 5a, b.
- Figur 7:: Funktionsprinzip der Ausrichtung des Empfängers der Lichtschranke gemäß Figuren 1 und 2.
- Figur 8:: Erste Ausführungsform einer Ausrichthilfe.
- Figur 9a, b:: Unterschiedliche Querschnittsdarstellungen der Anordnung gemäß Figur 8.
- Figur 10:: Zuordnung einer Rückmeldeeinheit zur Lichtschranke gemäß Figuren 1 und 2.
- Figur 11:: Zweite Ausführungsform einer Ausrichthilfe
a) Querschnittsdarstellung
b) perspektivische Darstellung.
- Figur 12:: Positionsanzeige für die Ausrichthilfe gemäß Figur 11.
- Figur 13:: Dritte Ausführungsform einer Ausrichthilfe.
- Figur 14:: Detaildarstellung von Farbskalen der Ausrichthilfe gemäß Figur 13.

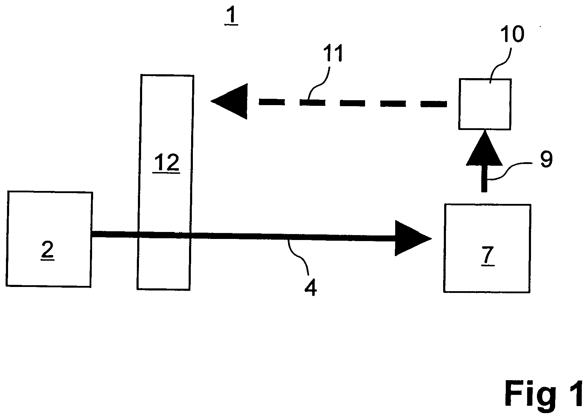

Figur 1 zeigt einen als Lichtschranke ausgebildeten optischen Sensor. Die Lichtschranke weist Sender 2 einem mit einem Sendelichtstrahlen 4 emittierenden Sendeelement und einen Empfänger 7 auf. Der Sender 2 und der Empfänger 7, der ein die Sendelichtstrahlen 4 empfangendes Empfangselement aufweist, sind an gegenüberliegenden Rändern eines Überwachungsbereichs angeordnet, so dass bei freiem Überwachungsbereich die vom Sender 2 emittierten Sendelichtstrahlen 4 den Überwachungsbereich durchlaufen und dann zum Empfänger 7 gelangen. Bei einem Objekteingriff im Überwachungsbereich gelangen die Sendelichtstrahlen 4 nicht mehr zum Empfänger 7. Dementsprechend wird in einer nicht dargestellten Auswerteeinheit der Lichtschranke in Abhängigkeit der Ausgangssignale des Empfängers 7 ein binäres Objektfeststellungssignal generiert. Dessen Schaltzustände geben an, ob sich ein Objekt im Überwachungsbereich befindet oder nicht, das heißt das Objektfeststellungssignal kann die Schaltzustände "Lichtstrecke unterbrochen" oder "Lichtstrecke frei" einnehmen.

Das Objektfeststellungssignal wird als Statusmeldung 9 über einen nicht dargestellten Schaltausgang ausgegeben. Zudem kann der Status, das heißt der aktuelle Schaltzustand des Objektfeststellungssignals, optisch angezeigt werden.

Zur Ausrichtung der Lichtschranke ist eine Ausrichthilfe 1 vorgesehen.

Die Ausrichthilfe 1 weist eine Lichtstrahlablenkeinheit 12 und eine Rückmeldeeinheit 10 auf.

Die Lichtstrahlablenkeinheit 12 wird in den Strahlengang der Lichtschranke gehalten und damit werden die Sendelichtstrahlen 4 soweit abgelenkt, bis der Status der Lichtschranke wechselt, das heißt der Schaltzustand des Objektfeststellungssignals sich ändert.

Die Statusmeldung 9 wird durch eine Rückmeldeeinheit 10 erfasst und zur Lichtstrahlablenkeinheit 12 als Rückmeldesignal 11 zurückgemeldet.

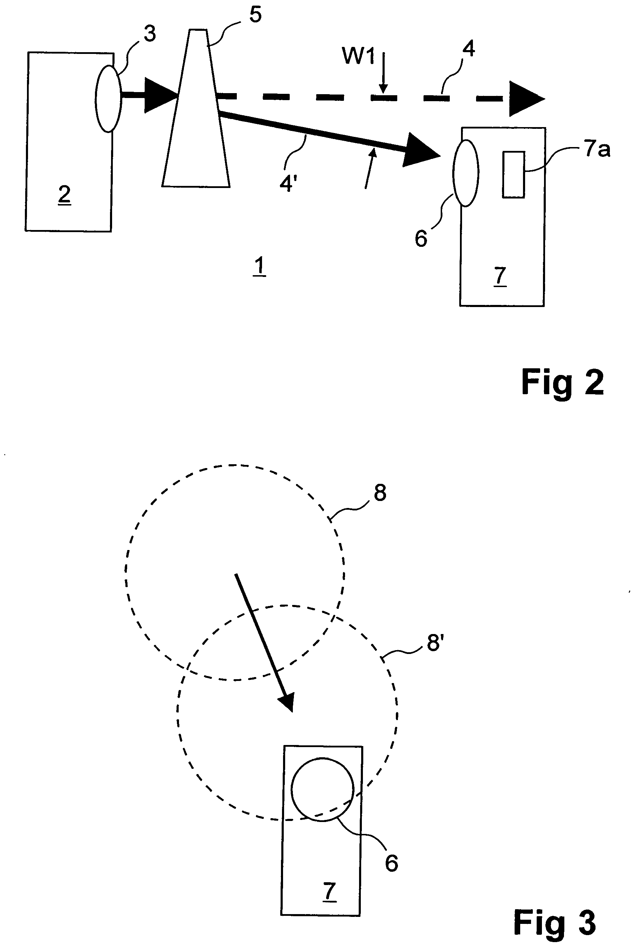

Figur 2 zeigt eine Detaillierung der Anordnung gemäß Figur 1. Der Sender 2 weist eine Sendeoptik 3 zur Strahlformung der Sendelichtstrahlen 4 des Sendelements auf. Der Empfänger 7 weist eine Empfangsoptik 6 zur Fokussierung der Sendelichtstrahlen 4 auf ein lichtempfindliches Empfangselement 7a, wie zum Beispiel einer Photodiode, auf.

Figur 2 zeigt die Prinzipdarstellung zur Ausrichtung der Lichtschranke mit Hilfe einer Lichtstrahlablenkeinheit 12 in Form eines Prismas 5, das im Strahlengang der Lichtschranke gedreht und dessen Winkel variiert werden kann. Dadurch werden die Sendelichtstrahlen 4 abgelenkt und treffen als Sendelichtstrahlen 4' die Empfangsoptik 6 der Lichtschranke. Aus dem Ablenkwinkel W1 und der Ablenkrichtung, bei der die Empfangsoptik 6 getroffen wird, kann auf die Fehlausrichtung der Lichtschranke geschlossen werden. Durch die Dämpfung der Sendelichtstrahlen 4, die durch das Einfügen der Ausrichthilfe 1 in Höhe von ca. 20% bewirkt wird, ist sichergestellt, dass nach dem Ausrichten eine Mindestfunktionsreserve vorhanden ist.

Figur 3 zeigt die Ausrichtung durch Verschiebung des Sendelichtfleckes 8 der Sendelichtstrahlen 4. Der Sender 2 erzeugt ohne die Lichtstrahlablenkeinheit 12 den Sendelichtfleck 8 auf der Empfangsseite. Entsprechend dem ermittelten Fehlwinkel wird der Sender 2 justiert, wodurch sich der Sendelichtfleck 8' ergibt, der von der Empfangsoptik 6 gesehen wird und das Schaltsignal "Lichtstrecke frei" generiert.

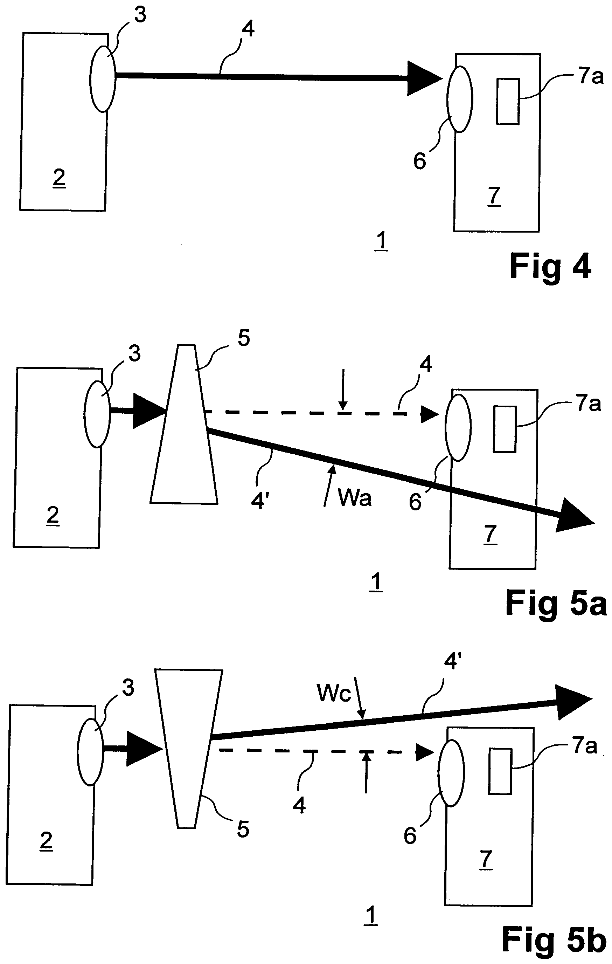

Figur 4 zeigt den Strahlverlauf bei ausgerichteter Lichtschranke. Das Schaltsignal "Lichtschranke frei" und die entsprechende Statusmeldung sagen noch nichts darüber aus, wie gut die Ausrichtung ist, beziehungsweise wie groß die Funktionsreserve für den Fall einer Dejustage oder Verschmutzung ist. Besonders an bereits in Betrieb befindlichen Anlagen ist eine Kontrolle der Ausrichtgüte nur sehr schwer oder mit hohem Zeitaufwand durchführbar.

Dabei liegt eine gute Ausrichtung und entsprechend eine hohe Funktionsreserve vor, wenn die Sendelichtstrahlen 4 mittig auf die Empfangsoptik 6 treffen, denn dann ist gewährleistet, dass bei kleinen Verkippungen der Sendelichtstrahlen 4 diese immer noch auf die Empfangsoptik 6 und damit auf das Empfangselement 7a treffen und die Lichtschranke den Status "Lichtstrecke frei" meldet. Treffen dagegen bei schlechter Ausrichtung die Sendelichtstrahlen 4 auf den Rand der Empfangsoptik 6, so ist die Funktionsreserve der Lichtschranke klein, da bereits kleine Verkippungen der Sendelichtstrahlen 4 dazu führen, dass diese nicht mehr auf die Empfangsoptik 6 treffen und die Lichtschranke nicht mehr den Status "Lichtstrecke frei" meldet.

Figur 5a zeigt die Kontrolle der Ausrichtgüte der Lichtschranke. Mit dem Prisma 5 werden die Sendelichtstrahlen 4 so weit abgelenkt, bis sie als Sendelichtstrahlen 4' die Empfangsoptik 6 gerade nicht mehr treffen und die Statusmeldung 9 auf "Lichtstrecke unterbrochen" wechselt. Der Ablenkwinkel Wa wird registriert und in einem zweiten Schritt, wie in Figur 5b gezeigt, die Sendelichtstrahlen 4' in die entgegen gesetzte Richtung ausgelenkt, bis wieder die Statusmeldung 9 auf "Lichtstrecke unterbrochen" wechselt. Das Verhältnis der beiden Ablenkwinkel Wa/Wc ist ein Maß für die Ausrichtgüte. Bei einem Verhältnis von etwa 1 liegen die Sendelichtstrahlen 4 symmetrisch zur optischen Achse der Empfangsoptik 7 und damit gut ausgerichtet.

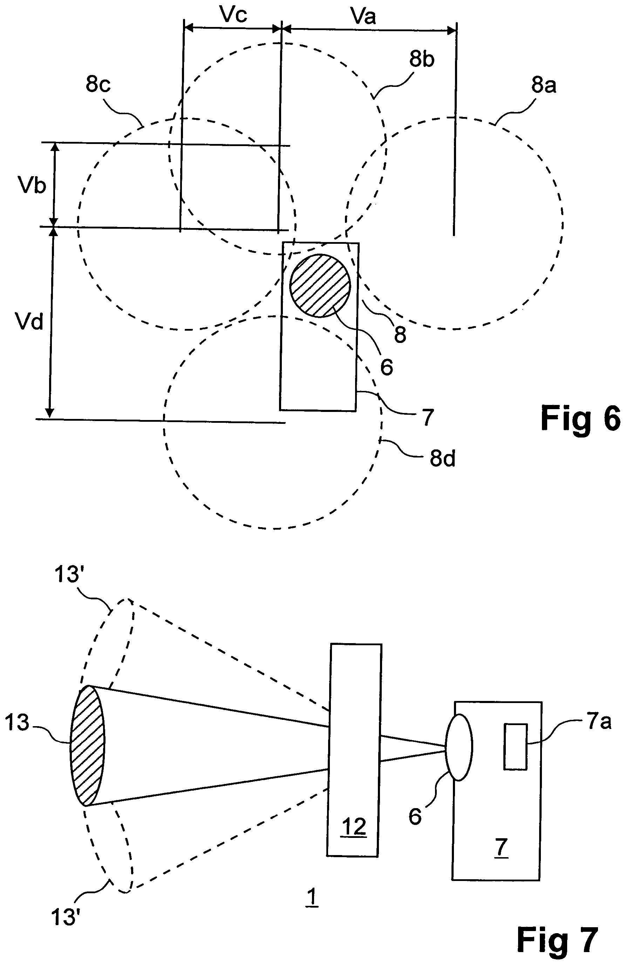

Figur 6 zeigt die Sendelichtfleckpositionen bei der Ausrichtkontrolle. Wird der Vorgang nach Figur 5 in senkrecht zueinander stehende Richtungen durchgeführt, erreicht der Sendelichtfleck 8 die vier Positionen 8a bis 8d. Aus den erfassten Ablenkwinkeln, beziehungsweise den Verschiebungen Va bis Vd, kann die Position des Sendelichtfleckes 8 kontrolliert werden.

Die Ausführungsformen gemäß den Figuren 4 bis 6 betreffen die Ausrichtung des Senders 2 der Lichtschranke. Hierzu wird die Ausrichthilfe 1 dem Sender 2 nachgeordnet um die Sendelichtstrahlen 4 definiert abzulenken, wobei aus der mittels der Rückmeldeeinheit 10 rückgemeldeten Statusmeldung 9 der Lichtschranke in Abhängigkeit der aktuellen Ablenkwinkel der Sendelichtstrahlen 4, die durch die Ausrichthilfe 1 erzeugt werden, die Güte der Ausrichtung des Senders 2 kontrolliert werden kann.

Alternativ kann mit der Ausrichthilfe 1 auch der Empfänger 7 der Lichtschranke ausgerichtet werden.

Figur 7 zeigt eine solche Ausrichtung des Empfängers 7. Zur optimalen Ausrichtung des Empfängers 7 wird die Ausrichthilfe 12 in den Strahlengang der Sendelichtstrahlen 4 vor den Empfänger 7 gehalten. Durch das Prisma 5 wird der Empfangsöffnungswinkel 13 analog zum Vorgang von Figur 5 soweit ausgelenkt, bis die Statusmeldung 9 auf "Lichtstrecke unterbrochen" wechselt und daraus die Ausrichtgüte ermittelt.

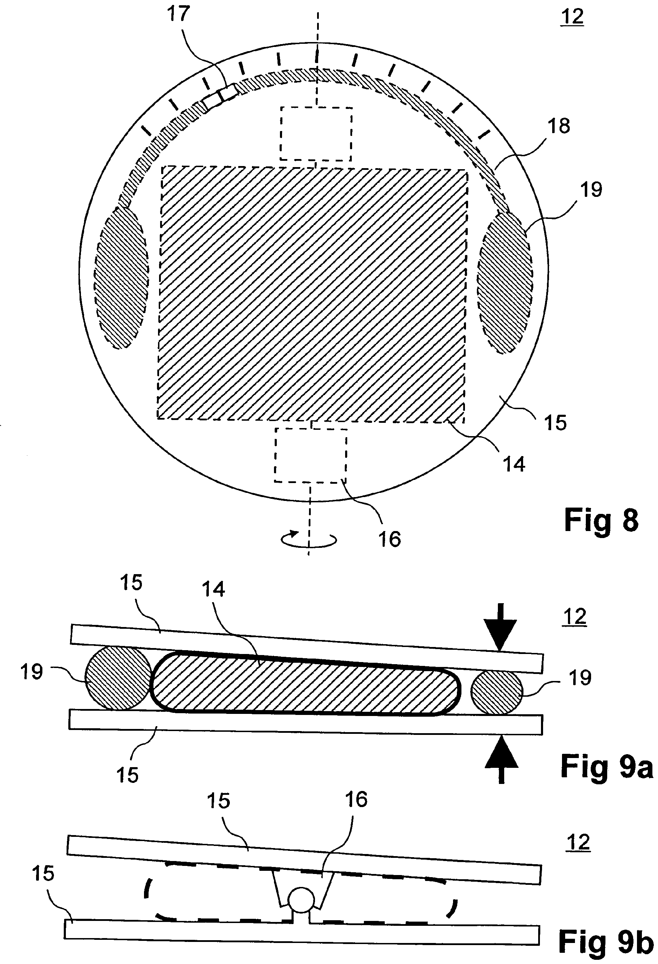

Figur 8 zeigt eine erste konstruktive Ausgestaltung der Ausrichthilfe 1. Das Prisma 5 wird durch die transparente, elastische Masse 14 gebildet, die in einem transparenten Beutel und zwischen zwei planparellelen, transparenten Platten 15 gehalten wird. Durch einseitigen Druck auf den Rand der Platten 15 bilden diese, wie in Figur 9a gezeigt, einen spitzen Winkel. Die Anzeige des Ablenkwinkels erfolgt durch einen Pfropfen 17, der in einer Kanüle 18 geführt wird. Bei Druck auf einen elastischen Flüssigkeitsbehälter 19 wird der Pfropfen 17 in der Kanüle 18 bewegt und zeigt den Ablenkwinkel an.

Figur 9b zeigt den Schnitt durch die Ausrichthilfe 1 nach Figur 8 mit dem Scharnier 16, das die beiden Platten 15 hält.

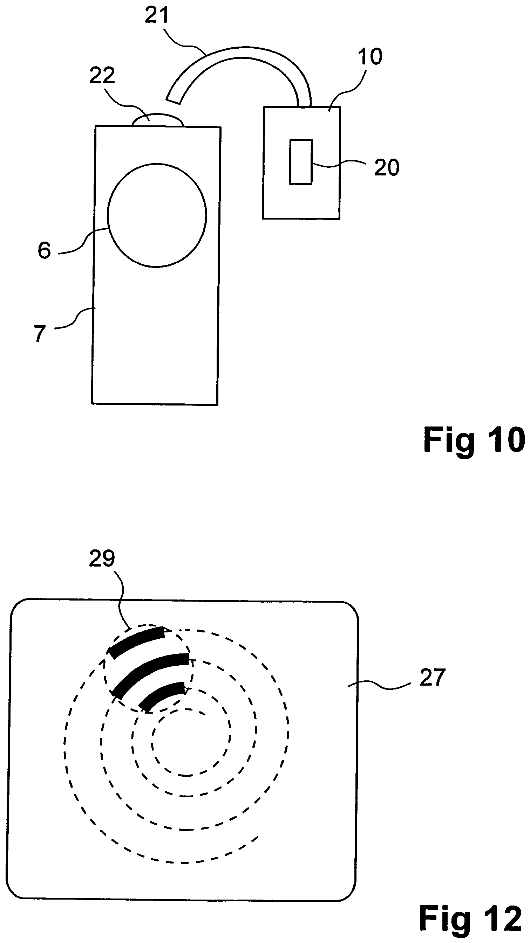

Figur 10 zeigt die Ankopplung der Rückmeldeeinheit 10 an die Statusanzeige 22 mittels eines Lichtleiters 21, der so gebogen wird, dass er das Licht einer Statusanzeige 22, über welche der Status, das heißt der Schaltzustand des Objektfeststellungssignals ausgegeben wird, erfasst. Die Rückmeldung erfolgt im vorliegenden Fall durch eine Lampe 20, die in Richtung Sender 2 und Lichtstrahlablenkeinheit 12 zurückstrahlt und von dort eindeutig erkannt wird. Für höhere Ansprüche enthält die Rückmeldeeinheit 10 einen Funksender, der den Status des Empfängers 7 zur Ablenkeinheit 12 sendet.

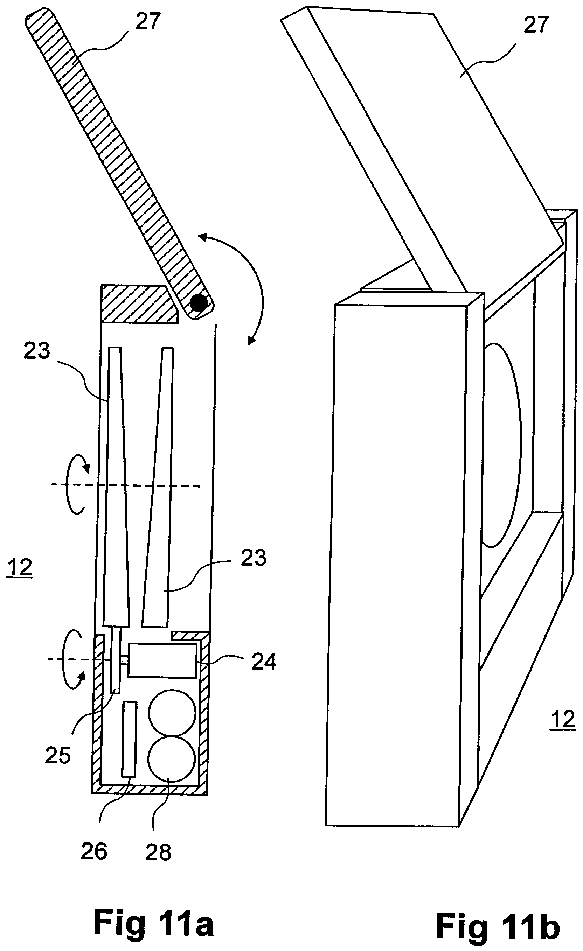

Die Figuren 11a, b zeigen ein zweites Ausführungsbeispiel der Ausrichthilfe 1 mit zwei rotierenden Prismenscheiben 23, die zusammen wie das Prisma 5 der Ausführungsform gemäß Figuren 4, 5 wirken. Diese werden jeweils durch einen Motor 24 über ein Reibrad 25 angetrieben. Durch unterschiedliche Drehzahlen der Prismenscheiben 23 wird erreicht, dass der Sendelichtfleck 8 die Umgebung des Empfängers 7 stern- oder spiralförmig abtastet. Eine Elektronikschaltung auf einer Leiterplatte 26 steuert den Motor und die Anzeige eines Bildschirms 27. Diese Ausführung wird durch Batterien 28 versorgt.

Figur 12 zeigt die Anzeige auf dem Bildschirm 27. Bei der gezeigten spiralförmigen Führung der Ablenkung der Sendelichtstrahlen 4 erscheint der Bereich bei der Statusmeldung 9 "Strecke frei" hell, und bezeichnet damit die aktuelle Sendefleckposition 29.

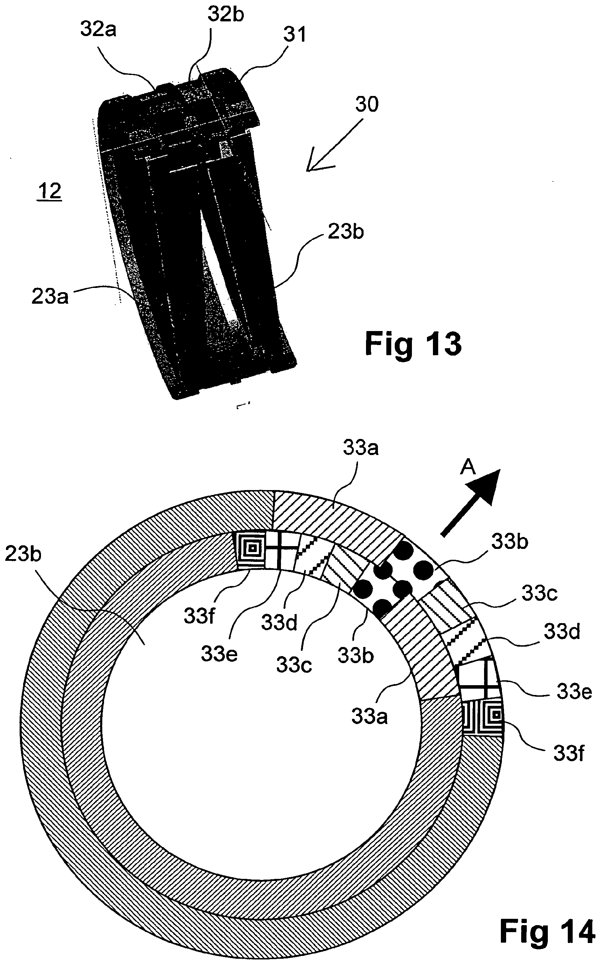

Figur 13 zeigt eine weitere Ausführungsform einer Lichtstrahlablenkeinheit 12 einer Ausrichthilfe 1. Die Lichtstrahlablenkeinheit 12 umfasst eine Prismenanordnung 30 bestehend aus zwei konzentrisch in einem Gehäuse 31 um ihre Symmetrieachsen drehbar gelagerten Prismenscheiben 23a, b. Die Prismenscheiben 23a, b sind identisch ausgebildet. Die einander zugewandten Stirnflächen der Prismenscheiben 23a, b sind von ebenen Schrägflächen gebildet, während die abgewandten Stirnflächen von ebenen Flächen gebildet sind, die in Ebenen senkrecht zu den Symmetrieachsen der Prismenscheiben 23a, b verlaufen. Die Prismenscheiben 23a, b sind im Gehäuse 31 drehbar gelagert. Durch Verstellen der Prismenscheiben 23a, b kann deren Relativdrehposition eingestellt werden und damit der Gesamtablenkwinkel der über die Prismenanordnung 30 geführten Sendelichtstrahlen 4, 4'. An jeder Mantelfläche einer Prismenscheibe 23a, b befindet sich eine Farbskala 32a, b. Die Farbskalen 32a, b bilden zusammen eine Maßskala, mittels derer der Gesamtablenkwinkel der Sendelichtstrahlen 4, 4', der mit der Prismenanordnung 30 erhalten wird, angezeigt, das heißt dargestellt wird. Jede Farbskala 32a, b besteht aus einer Anordnung von hintereinander angeordneten, sich über einen Winkelbereich von 90° erstreckenden Farbsegmenten 33a-33f. Diese sind in Figur 14 detailliert dargestellt. Im vorliegenden Fall ist für jede Prismenscheibe 23a, b jeweils ein rotes Farbsegment 33a, ein oranges Farbsegment 33b, ein gelbes Farbsegment 33c, ein grünes Farbsegment 33d, ein blaues Farbsegment 33e und ein violettes Farbsegment 33f vorgesehen. Wie aus Figur 14 ersichtlich, sind diese Farbsegmente 33a,b,c,d,e,f bei der Farbskala 32a der ersten Prismenscheibe 23a im Uhrzeigersinn und bei der Farbskala 32b der zweiten Prismenscheibe 23b entgegen dem Uhrzeigersinn angeordnet.

Das rote Farbsegment 33a ist jeweils in dem Bereich einer Prismenscheibe 23a,b angeordnet, in dem die Dicke der Prismenscheibe 23a, b maximal angeordnet ist. Die Ausdehnungen der Farbsegmente 33a-33b variieren mit dem Cosinus des Verdrehwinkels der Prismenscheiben 23a, b zueinander. Daher nehmen die Ausdehnungen vom roten Farbsegment 33a zum violetten Farbsegment 33f hin kontinuierlich ab.

Durch diese Ausbildung der Farbsegmente 33a-33f kann die Ablenkrichtung A der Sendelichtstrahlen 4, 4' bei Durchgang durch die Prismenanordnung 30 visualisiert werden. Da sich die Farbsegmente 32a, b jeweils über 90° erstrecken, decken diese zusammen einen Winkelbereich von 180° ab, so dass im Ergebnis für jede Verdrehposition durch die Relativlagen der Farbsegmente 33a-33f die Ablenkrichtung der Sendelichtstrahlen 4, 4' angezeigt wird. Die Ablenkrichtung der Sendelichtstrahlen 4, 4' ist dabei diejenige, wo zwei identische Farbsegmente 32a, b übereinander liegen. Im Falle der in Figur 14 eingestellten Verdrehposition der Prismenscheiben 23a, b sind dies die beiden orangen Farbsegmente 33b, das heißt die Ablenkrichtung A liegt in Richtung dieser orangen Farbsegmente 33b.

Nachdem die Verdrehposition der Prismenscheiben 23a, b in der dargestellten Weise eingestellt wurde, kann die gesamte Prismenanordnung 30 um ihre Symmetrieachse zur Verstellung der Ablenkrichtung der Sendelichtstrahlen 4, 4' gedreht werden um die Güte der Ausrichtung der Sendelichtstrahlen 4, 4' des jeweiligen optischen Sensors zu kontrollieren.

### Bezugszeichenliste

- (1): Ausrichthilfe
- (2): Sender
- (3): Sendeoptik
- (4): Sendelichtstrahlen
- (4'): Sendelichtstrahlen
- (5): Prisma
- (6): Empfangsoptik
- (7): Empfänger
- (7a): Empfangselement
- (8): Sendelichtfleck
- (8'): Sendelichtfleck
- (9): Statusmeldung
- (10): Rückmeldeeinheit
- (11): Rückmeldesignal
- (12): Lichtstrahlablenkeinheit
- (13): Empfangsöffnungswinkel
- (14): Masse
- (15): Platte
- (16): Scharnier
- (17): Pfropfen
- (18): Kanüle
- (19): Flüssigkeitsbehälter
- (20): Lampe
- (21): Lichtleiter
- (22): Statusanzeige
- (23a): Prismenscheibe
- (23b): Prismenscheibe
- (24): Motor
- (25): Reibrad
- (26): Leiterplatte
- (27): Bildschirm
- (28): Batterien
- (29): Sendefleckposition
- (30): Prismenanordnung
- (31): Gehäuse
- (32a): Farbskala
- (32b): Farbskala
- (33a): Farbsegment
- (33b): Farbsegment
- (33c): Farbsegment
- (33d): Farbsegment
- (33e): Farbsegment
- (33f): Farbsegment

- A:: Ablenkrichtung
- W1:: Ablenkwinkel (durch die Ausrichthilfe)
- Wa:: Ablenkwinkel zur Kontrolle der Ausrichtgüte in Richtung a
- Wc:: Ablenkwinkel zur Kontrolle der Ausrichtgüte in Richtung c
- Va-Vd:: Sendefleckverschiebung bei der Kontrolle der Ausrichtgüte

## Patentansprüche

1. Verfahren zur Ausrichtung eines optischen Sensors, umfassend wenigstens einen Sendelichtstrahlen emittierenden Sender, wenigstens einen Empfänger zum Empfang der Sendelichtstrahlen sowie eine Auswerteeinheit zur Generierung eines binären Objektfeststellungssignals in Abhängigkeit der Empfangssignale, wobei die Sendelichtstrahlen zur Detektion von Objekten in einem Überwachungsbereich geführt sind, und wobei die Schaltzustände des Objektfeststellungssignals als Statusmeldung ausgegeben werden, und wobei durch Einbringen einer Lichtstrahlablenkeinheit (12) der Strahlengang der Sendelichtstrahlen (4) im Überwachungsbereich verändert wird und die dadurch bedingten Änderungen der Statusmeldung zur Kontrolle der Ausrichtung der Sendelichtstrahlen (4) herangezogen werden, **dadurch gekennzeichnet, dass** die Lichtstrahlablenkeinheit (12) wenigstens ein rotierendes Prisma (5) aufweist.

2. Verfahren nach Anspruch 1, **dadurch gekennzeichnet, dass** die Statusmeldung zur Lichtstrahlablenkeinheit (12) zurückgesendet wird.

3. Verfahren nach einem der Ansprüche 1 oder 2, **dadurch gekennzeichnet, dass** die mit der Lichtstrahlablenkeinheit (12) erzeugte Ablenkung der Sendelichtstrahlen (4) angezeigt wird.

4. Verfahren nach einem der Ansprüche 1 bis 3, **dadurch gekennzeichnet, dass** die Sendelichtstrahlen (4) soweit abgelenkt werden, bis sich die Statusmeldung ändert.

5. Verfahren nach Anspruch 4, **dadurch gekennzeichnet, dass** zur groben Ausrichtung der optischen Sensoren die Sendelichtstrahlen (4) soweit abgelenkt werden, bis als Statusmeldung ein freier Überwachungsbereich ausgegeben wird, und dass nach erfolgter Grobausrichtung die Sendelichtstrahlen (4) in entgegengesetzten Richtungen jeweils soweit abgelenkt werden, bis als Statutsmeldung ein freier Überwachungsbereich ausgegeben wird und aus dem Verhältnis beider Ablenkwinkel auf die Güte der Ausrichtung geschlossen wird.

6. Verfahren nach einem der Ansprüche 1 bis 5, **dadurch gekennzeichnet, dass** der optische Sensor nach dem Lichtschrankenprinzip arbeitet, wobei dieser von einer Lichtschranke, einem Lichtgitter oder einer Reflexionslichtschranke gebildet wird.

7. Verfahren nach Anspruch 6, **dadurch gekennzeichnet, dass** der Sender (2) ausgerichtet wird, indem die Lichtstrahlablenkeinheit (12) vor diesem in den Strahlengang der Sendelichtstrahlen (4) eingebracht wird.

8. Verfahren nach Anspruch 6, **dadurch gekennzeichnet, dass** der Empfänger (7) ausgerichtet wird, indem die Lichtstrahlablenkeinheit (12) vor diesem im Strahlengang der Sendelichtstrahlen (4) eingebracht wird.

9. Ausrichthilfe zur Durchführung des Verfahrens nach einem der Ansprüche 1 bis 8, mit einer in den Strahlengang der Sendelichtstrahlen (4) eines optischen Sensors einbringbaren Lichtstrahlablenkeinheit (12), wobei Änderungen der Statusmeldungen der optischen Sensoren, die durch die mittels der Lichtstrahlablenkeinheit (12) verursachten Ablenkungen der Sendelichtstrahlen (4) bedingt sind, ein Maß für die Ausrichtung der Sendelichtstrahlen (4) bilden, **dadurch gekennzeichnet, dass** die Lichtstrahlablenkeinheit (12) wenigstens ein rotierendes Prisma (5) aufweist.

10. Ausrichthilfe nach Anspruch 9, **dadurch gekennzeichnet, dass** die Lichtstrahlablenkeinheit (12) zwei mit unterschiedlicher Geschwindigkeit rotierende Prismen (5) aufweist.

11. Ausrichthilfe nach Anspruch 9, **dadurch gekennzeichnet, dass** die Lichtstrahlablenkeinheit (12) eine Prismenanordnung mit zwei konzentrischen, gegeneinander drehbaren Prismenscheiben (23a, b) aufweist, deren Relativdrehposition zur Vorgabe des Ablenkwinkels der über die Prismenanordnung geführten Sendelichtstrahlen (4) einstellbar ist, und dass die von den Prismenscheiben (23a, b) gebildete Prismenanordnung als Gesamtheit zur Variation des Ablenkwinkels drehbar ist.

12. Ausrichthilfe nach Anspruch 11, **dadurch gekennzeichnet, dass** die Prismenanordnung eine Messskala zur Anzeige des eingestellten Ablenkwinkels der Sendelichtstrahlen aufweist.

13. Ausrichthilfe nach einem der Ansprüche 9 bis 12, **dadurch gekennzeichnet, dass** diese eine Rückmeldeeinheit (10) zur Übertragung der Statusmeldung (9) an die Lichtstrahlablenkeinheit (12) aufweist, wobei die Rückmeldeeinheit (10) die Statusmeldung (9) in Form von Funksignalen überträgt.

14. Ausrichthilfe nach Anspruch 13, **dadurch gekennzeichnet, dass** diese Anzeigemittel zur Anzeige der aktuellen Ablenkpositionen der Lichtstrahlablenkeinheit (12) sowie der Statusmeldung (9) aufweist.

## Claims

1. Method of aligning an optical sensor, comprising at least one transmitter emitting transmitted light beams, at least one receiver for receiving the transmitted light beams and an evaluating unit for generating a binary object detection signal in dependence on the received signals, wherein the transmitted light beams are conducted into a monitoring region for detection of objects, wherein the switch states of the object detection signal are issued as a status report and wherein through introduction of a light beam deflecting unit (12) the beam path of the transmitted light beams (4) in the monitoring region is changed and the resulting changes in the status report are utilised for controlling the orientation of the transmitted light beams (4), **characterised in that** the light beam deflecting unit (12) comprises at least one rotating prism (5).

2. Method according to claim 1, **characterised in that** the status report is transmitted back to the light beam deflecting unit (12).

3. Method according to one of claims 1 and 2, **characterised in that** the deflection of the transmitted light beams (4) produced by the light beam deflecting unit (12) is indicated.

4. Method according to any one of claims 1 to 3, **characterised in that** the transmitted light beams (4) are deflected until the status report changes.

5. Method according to claim 4, **characterised in that** for coarse alignment of the optical sensors the transmitted light beams (4) are deflected until a free monitoring region is issued as status report and, after coarse alignment of the transmitted light beams (4) has been carried out, are respectively deflected in opposite directions until a free monitoring region is issued as status report and a conclusion about the quality of the alignment is made on the basis of the relationship of the two deflecting angles.

6. Method according to any one of claims 1 to 5, **characterised in that** the optical sensor operates in accordance with the light barrier principle, wherein this is formed by a light barrier, a light grating or a reflection light barrier.

7. Method according to claim 6, **characterised in that** the transmitter (2) is aligned **in that** the light beam deflecting unit (12) is introduced in front thereof into the beam path of the transmitted light beams (4).

8. Method according to claim 6, **characterised in that** the receiver (7) is aligned **in that** the light beam deflecting unit (12) is introduced in front thereof into the beam path of the transmitted light beams (4).

9. Alignment aid for carrying out the method according to any one of claims 1 to 8, comprising a light beam deflecting unit (12) introducible into the beam path of the transmitted light beams (4) of an optical sensor, wherein changes in the status reports of the optical sensors due to deflections of the transmitted light beams (4) caused by means of the light beam deflecting unit (12) form a measure for the alignment of the transmitted light beams (4), **characterised in that** the light beam deflecting unit (12) comprises at least one rotating prism (5).

10. Alignment aid according to claim 9, **characterised in that** the light beam deflecting unit (12) comprises two prisms (5) rotating at different speeds.

11. Alignment aid according to claim 9, **characterised in that** the light beam deflecting unit (12) comprises a prism arrangement with two concentric prism discs (23a, b), which are rotatable in opposite sense and the relative rotational position of which is settable for presetting the deflection angle of the transmitted light beams (4) conducted by way of the prism arrangement, and that the prism arrangement formed by the prism discs (23a, b) is rotatable in its entirety for variation of the deflection angle.

12. Alignment aid according to claim 11, **characterised in that** the prism arrangement has a measurement scale for indication of the set deflection angle of the transmitted light beams.

13. Alignment aid according to any one of claims 9 to 12, **characterised in that** this has a feedback unit (10) for transmission of the status report (9) to the light beam deflecting unit (12), wherein the feedback unit (10) transmits the status report (9) in the form of radio signals.

14. Alignment aid according to claim 13, **characterised in that** this comprises indicating means for indicating the current deflection position of the light beam deflecting unit (12) as well as the status report (9).

## Revendications

1. Procédé d'alignement d'un capteur optique comprenant au moins un émetteur émettant des rayons lumineux d'émission, au moins un récepteur pour recevoir les rayons lumineux d'émission ainsi qu'une unité d'évaluation pour générer un signal binaire de détection d'objet en fonction des signaux de réception, les rayons lumineux d'émission étant guidés dans une zone de surveillance pour la détection d'objets, et les états de commutation du signal de détection d'objet étant émis sous la forme d'un message d'état, et le chemin optique des rayons lumineux d'émission (4) dans la zone de surveillance étant modifié par introduction d'une unité de déviation de rayons lumineux (12) et les changements consécutifs du message d'état étant utilisées pour contrôler l'alignement des rayons lumineux d'émission (4), **caractérisé en ce que** l'unité de déviation de rayons lumineux (12) présente au moins un prisme rotatif (5).

2. Procédé selon la revendication 1, **caractérisé en ce que** le message d'état est renvoyé vers l'unité de déviation de rayons lumineux (12).

3. Procédé selon l'une des revendications 1 ou 2, **caractérisé en ce que** la déviation des rayons lumineux d'émission (4) produite par l'unité de déviation de rayons lumineux (12) est affichée.

4. Procédé selon l'une des revendications 1 à 3, **caractérisé en ce que** les rayons lumineux d'émission (4) sont déviés jusqu'à ce que le message d'état change.

5. Procédé selon la revendication 4, **caractérisé en ce que** pour l'alignement grossier des capteurs optiques, les rayons lumineux d'émission (4) sont déviés jusqu'à ce qu'une zone de surveillance libre soit délivrée en tant que message d'état, et qu'après qu'un alignement grossier a été effectué, les rayons lumineux d'émission (4) sont chaque fois déviés dans des directions opposées jusqu'à ce qu'une zone de surveillance libre soit délivrée en tant que message d'état, et la qualité de l'alignement est déduite du rapport entre les deux angles de déviation.

6. Procédé selon l'une des revendications 1 à 5, **caractérisé en ce que** le capteur optique fonctionne selon le principe de la barrière lumineuse, celui-ci étant formé par une barrière lumineuse, un rideau lumineux ou une barrière lumineuse à réflexion.

7. Procédé selon la revendication 6, **caractérisé en ce que** l'on aligne l'émetteur (2) en introduisant l'unité de déviation de rayons lumineux (12) devant celui-ci dans le chemin optique des rayons lumineux d'émission (4).

8. Procédé selon la revendication 6, **caractérisé en ce que** l'on aligne le récepteur (7) en introduisant l'unité de déviation de rayons lumineux (12) devant celui-ci dans le chemin optique des rayons lumineux d'émission (4).

9. Aide à l'alignement pour mettre en oeuvre le procédé selon l'une des revendications 1 à 8, avec une unité de déviation de rayons lumineux (12) pouvant être introduite dans le chemin des rayons lumineux d'émission (4) d'un capteur optique, des changements des messages d'état des capteurs optiques, qui sont consécutifs aux déviations des rayons lumineux d'émission (4) provoquées au moyen de l'unité de déviation de rayons lumineux (12), formant une mesure de l'alignement des rayons lumineux d'émission (4), **caractérisée en ce que** l'unité de déviation de rayons lumineux (12) présente au moins un prisme rotatif (5).

10. Aide à l'alignement selon la revendication 9, **caractérisée en ce que** l'unité de déviation de rayons lumineux (12) présente deux prismes (5) tournant à des vitesses différentes.

11. Aide à l'alignement selon la revendication 9, **caractérisée en ce que** l'unité de déviation de rayons lumineux (12) présente un agencement de prismes avec deux disques prismatiques (23a, b) concentriques, pouvant tourner l'un par rapport à l'autre, dont la position de rotation relative est réglable pour prescrire l'angle de déviation des rayons lumineux d'émission (4) guidés par l'agencement de prismes, et que l'agencement de prismes formé par les disques prismatiques (23a, b) peut tourner dans son ensemble pour faire varier l'angle de déviation.

12. Aide à l'alignement selon la revendication 11, **caractérisée en ce que** l'agencement de prismes présente une échelle de mesure pour afficher l'angle de déviation réglé des rayons lumineux d'émission.

13. Aide à l'alignement selon l'une des revendications 9 à 12, **caractérisée en ce que** celle-ci présente une unité de rétrosignalisation (10) pour transmettre le message d'état (9) à l'unité de déviation de rayons lumineux (12), l'unité de rétrosignalisation (10) transmettant le message d'état (9) sous la forme de signaux radio.

14. Aide à l'alignement selon la revendication 13, **caractérisée en ce que** celle-ci présente des moyens d'affichage pour afficher les positions de déviation actuelles de l'unité de déviation de rayons lumineux (12) ainsi que le message d'état (9).
